# FASCICULE DE BREVET EUROPEEN

(11) **EP 2 945 263 B1**
(45) Date de publication et mention de la délivrance du brevet: **16.10.2019**
(21) Numéro de dépôt: 15001421.5
(22) Date de dépôt: 12.05.2015
(51) Int. Cl.: H02K 7/02, H02J 9/06

(54) **SYSTÈME D'ALIMENTATION ÉLECTRIQUE SANS COUPURE**
ELEKTRISCHES UNTERBRECHUNGSFREIES STROMVERSORGUNGSSYSTEM
UNINTERRUPTIBLE POWER SUPPLY SYSTEM

(30) Priorité: 16.05.2014 BE 201400366
(43) Date de publication de la demande: 18.11.2015
(73) Titulaire: KS RESEARCH, société anonyme, 4651 Battice (BE)
(72) Inventeur: Schoebrechts, Jacques, 4651 Battice (BE); Pire, Stéphane, 4651 Battice (BE); Pardue, Byron Andrew, 4651 Battice (BE)
(74) Mandataire: Donné, Eddy

(56) Documents cités:
- EP-A1- 1 533 884
- WO-A2-2014/172737
- DE-A1- 19 712 814
- US-A- 4 035 659
- US-B1- 6 184 593

## Description

L'invention concerne un système d'alimentation électrique sans coupure destiné aux installations de grande puissance pour des organisations qui ne peuvent tolérer aucune perturbation sur leur réseau électrique.

Afin de garantir l'alimentation électrique sans coupure, on utilise fréquemment des « systèmes d'alimentation dynamiques sans interruption » (ADSI ou ASI) généralement constitués d'au moins deux composants essentiels : d'une part on dispose d'un accumulateur d'énergie cinétique et d'autre part d'une machine synchrone, le tout assemblé sur un châssis commun.

Cette configuration minimale est par exemple celle qui est décrite dans le brevet européen EP 1.533.884 qui est considéré comme incorporé par référence.

Un accumulateur d'énergie cinétique, comme décrit dans ce brevet européen EP 1.533.884, comprend une masse rotative sous forme d'un tambour qui tourne librement autour de l'arbre de la machine synchrone et qui en temps normal, c'est-à-dire sans coupure électrique, est entrainée à une vitesse nettement supérieure à celle de la machine synchrone.

Le document DE-A-197 12 814 décrit un accumulateur d'énergie comportant deux masses d'inertie, chacune d'elle étant reliée de façon rigide à une extrémité d'arbre d'une machine motrice/génératrice arrangée entre ces deux masses.

A l'occasion d'une coupure électrique, la masse rotative de l'accumulateur, grâce à son énergie cinétique accumulée en temps normal, devient moteur pour la machine synchrone qui instantanément prend le rôle d'alternateur. Ce dernier conserve une vitesse de rotation constante pour générer un courant alternatif avec une fréquence constante qui correspond à la fréquence du courant alternatif du réseau, par exemple 50 HZ ou 60 Hz.

A cette fin, l'ADSI est muni d'un couplage électromagnétique réglable entre la masse tournante et l'arbre de l'alternateur afin de pouvoir contrôler le transfert de l'énergie cinétique vers l'alternateur et entrainer celui-ci à la vitesse constante désirée.

Cette configuration permet d'assurer une autonomie généralement supérieure à 10 secondes, soit le temps nécessaire au démarrage d'un groupe électrogène qui se connecte électriquement via un dispositif de couplage appelé inverseur de source et assure une continuité de l'alimentation.

Dans certains cas un moteur Diesel peut être associé, en prévoyant un second bout d'arbre à l'accumulateur d'énergie ou à l'alternateur et un système de couplage mécanique temporaire tel que par exemple un embrayage. Dans cette dernière configuration, le moteur Diesel est destiné à reprendre la charge avant l'expiration totale de l'énergie disponible dans l'accumulateur.

Les systèmes décrits ci-dessus doivent garantir une fiabilité très élevée étant donné qu'ils sont employés pour des utilisateurs qui ne peuvent souffrir d'aucune perturbation sur leur réseau électrique.

Le marché pour ce genre d'alimentation est en pleine croissance du fait de l'augmentation du nombre et de l'importance des centres de données et des industries de haute technologie. L'instabilité des grands réseaux électriques due à l'utilisation d'énergies alternatives engendre une demande accrue de systèmes de grande puissance pour la fiabilisation des hôpitaux, des grandes administrations, des centres de données ou des industries de haute technologie.

Il y a donc une demande d'ADSI de puissance unitaire croissante, qui permet de réduire le nombre de machines nécessaires et de rendre ainsi les installations plus simples et nettement plus économiques. Les dispositifs ADSI décrits ci-dessus sont cependant limités en termes de puissance et d'autonomie par l'accumulateur d'énergie. Les accumulateurs d'énergie cinétiques reposent sur un concept dans lequel des masses importantes de grand diamètre sont en rotation à des vitesses élevées.

De ce fait, les tensions mécaniques qui sont induites dans les parties tournantes à grande vitesse limitent à la fois le diamètre et la vitesse de rotation selon la loi qui régit les forces centrifuges f = m.ω²r. Un autre élément à considérer est la masse totale de la partie tournante qui accumule l'énergie selon la loi E = ½ J.ω². Cette masse doit être supportée par des roulements et de ce fait on atteint très vite les limites en termes de charge et de durée de vie des capacités des roulements que l'on trouve chez les principaux fabricants.

Par contre, les machines synchrones couramment disponibles dans le commerce peuvent fournir aisément des puissances plus élevées que celles des accumulateurs d'énergie cinétique.

Une solution à ce problème est de coupler plusieurs ADSI en parallèle pour multiplier la puissance unitaire disponible de l'ADSI. En effet, la puissance unitaire de chaque ADSI est limitée par la masse tournante de l'accumulateur. Cette solution par contre est chère et encombrante.

Une autre solution connue est celle qui est décrite dans la publication DE 197.12.814 A1, qui décrit un alternateur électrique avec de chaque côté un volant accumulateur d'énergie cinétique

Dans cette application les volants sont solidaires avec l'arbre de l'alternateur qui est donc entrainé à tout moment à la même vitesse des volants. En cas de coupure d'électricité, les volants font office de moteurs pour l'alternateur, dont la vitesse diminue pendant la période de coupure de l'électricité et change en fonction de la charge de l'alternateur qui est fonction de la puissance demandée par la charge critique à alimenter.

Un désavantage de cette application est que l'alternateur n'est pas capable de délivrer un courant alternatif à fréquence constante, d'où le besoin d'un système de redressement et de réglage très complexe et coûteux pour arriver à une alimentation électrique adéquate pour la charge critique.

L'invention a pour but de remédier aux inconvénients précités.

Ce but est atteint selon l'invention en introduisant une ADSI comportant une machine synchrone à deux bouts d'arbres insérée entre deux accumulateurs d'énergie cinétique dans le but de doubler la puissance unitaire, chacun des deux accumulateurs d'énergie cinétique étant muni d'une masse rotative tournant librement autour l'arbre de la machine synchrone, l'ADSI comportant un seul alternateur de puissance double associé aux deux accumulateurs d'énergie cinétique en une seule machine. Elle utilise une régulation qui équilibre la vitesse de rotation des masses rotatives des deux accumulateurs lors d'un transfert d'énergie cinétique des accumulateurs vers la machine synchrone, par exemple lors d'une coupure électrique du réseau.

L'avantage d'un tel système d'alimentation électrique est que l'alternateur est dimensionné pour une puissance double et constitue ainsi une machine dont la puissance unitaire est double de la machine traditionnelle décrite ci-dessus.

L'équilibre entre les vitesses de rotation des deux masses rotatives pendant la période de coupure d'électricité permet de répartir la puissance qui est transmise par chacune des masses rotatives à la machine synchrone qui à cet instant joue le rôle d'alternateur. On empêche ainsi que l'énergie cinétique d'un accumulateur soit épuisée plus vite que l'énergie cinétique de l'autre accumulateur, ce qui serait inévitable puisque les caractéristiques mécaniques, électriques et les conditions de fonctionnement des deux accumulateurs ne sont jamais identiques.

Sans répartition de la puissance délivrée par les accumulateurs on arriverait inévitablement à une situation dans laquelle l'énergie cinétique d'un accumulateur serait épuisée prématurément. La puissance de l'accumulateur non-épuisé serait alors insuffisante pour entrainer l'alternateur surdimensionné de puissance double.

L'ADSI selon l'invention est moins encombrant qu'un ADSI traditionnel avec un seul accumulateur d'énergie cinétique dont la puissance est en concordance avec la puissance de la machine synchrone couplée à l'accumulateur.

Le contrôle de l'ADSI est simple et peu coûteux.

En temps normal sans coupure électrique, les masses tournantes sont toujours entrainées à une vitesse plus élevée que celle de la machine synchrone, ce qui permet d'accumuler plus d'énergie cinétique dans les masses tournantes, tout en respectant la vitesse de rotation de la machine synchrone nécessaire à l'obtention d'un courant alternatif avec la fréquence désirée.

De préférence, mais non obligatoirement, dans le système d'alimentation électrique sans coupure (ADSI) les carcasses de la machine et des accumulateurs sont boulonnés ensemble pour ne former qu'une seule entité montée sur un châssis commun pour former un ensemble indéformable.

L'avantage d'un tel montage rigide sur un châssis est que l'ensemble ainsi formé n'est pas tributaire des irrégularités du sol sur lequel il est posé.

De préférence la machine synchrone est équipée d'un système de connexion autonome comportant une inductance et deux disjoncteurs dont le premier disjoncteur sert à interrompre la connexion de la machine synchrone avec le réseau électrique et dont le deuxième disjoncteur sert à maintenir la connexion de la machine synchrone avec la charge critique qui doit être alimentée sans interruption. Un troisième disjoncteur ou interrupteur communément appelé « by-pass » est en général installé entre l'entrée et la sortie de l'ADSI afin de pouvoir continuer à alimenter les charges critiques en cas d'indisponibilité de l'ADSI. Outre les composants de puissance décrits ci-dessus, le système de connexion autonome intègre également tous les organes qui servent à la commande, au contrôle, à la communication et à la sécurité.

L'avantage d'un tel système de connexion autonome est que la machine synchrone peut automatiquement se découpler du réseau lorsqu'il est défaillant tout en maintenant la charge critique alimentée par la machine synchrone, celle-ci puisant alors son énergie dans les accumulateurs cinétiques. Il est cependant important de veiller à une bonne répartition de la puissance entre les accumulateurs d'énergie lorsque ceux-ci sont en action afin d'éviter une décharge prématurée de l'un ou l'autre accumulateur. A cette fin le dispositif de régulation du système de connexion autonome échangera et corrigera en temps réel la vitesse des masses cinétiques en rotation pour qu'elles restent identiques.

Dans certains cas l'ADSI est équipé d'un inverseur de source qui peut commuter entre le réseau d'électricité et une source alternative comme par exemple un générateur à moteur Diesel qui peut assurer une alimentation de longue durée dans le cas où le réseau ne revient pas assez rapidement.

Les systèmes dynamiques d'alimentation électrique sans coupure comportant des machines synchrones à deux bouts d'arbre insérées entre deux accumulateurs d'énergie cinétique peuvent être connectés en parallèle pour réaliser des puissances encore plus grandes.

L'avantage d'une telle connectivité est qu'on peut accroître la puissance sans augmenter ni les masses ni le diamètre des masses en rotation des accumulateurs.

Il est aussi possible de faire fonctionner un ou plusieurs systèmes d'alimentation électrique sans coupure du type décrit en moyenne tension par l'intermédiaire d'un ou de plusieurs transformateurs insérés entre la ou les machines synchrones et son ou ses systèmes de connectivité autonome.

L'avantage de l'invention est que le nombre de transformateurs et de systèmes de connectivité est réduit par 2 du fait du doublement de la puissance de l'ADSI.

Pour plus de clarté, quelques exemples de réalisations d'un ADSI selon l'invention sont décrits ci-après à titre illustratif et non restrictif, référence étant faite aux dessins annexés dans lesquels :
La figure 1 représente une coupe schématique selon l'axe de rotation longitudinal d'un système d'alimentation électrique sans coupure (ADSI) selon la connaissance de l'art ;
la figure 2 représente une coupe selon l'axe de rotation longitudinal d'un système d'alimentation électrique avec un moteur Diesel couplé à une machine synchrone selon la connaissance de l'art;
la figure 3 représente une coupe selon l'axe de rotation longitudinal d'un ADSI selon l'invention ;
la figure 4 représente la figure 3, mais fixée sur un châssis et liée au réseau et à la charge par un système de connexion autonome ;
la figure 5 représente la figure 4, mais maintenant équipée d'un inverseur de source ;
la figure 6 représente la figure 4, mais maintenant équipée d'un transformateur supplémentaire ;
la figure 7 représente deux systèmes comme dans la figure 4, connectés en parallèle.

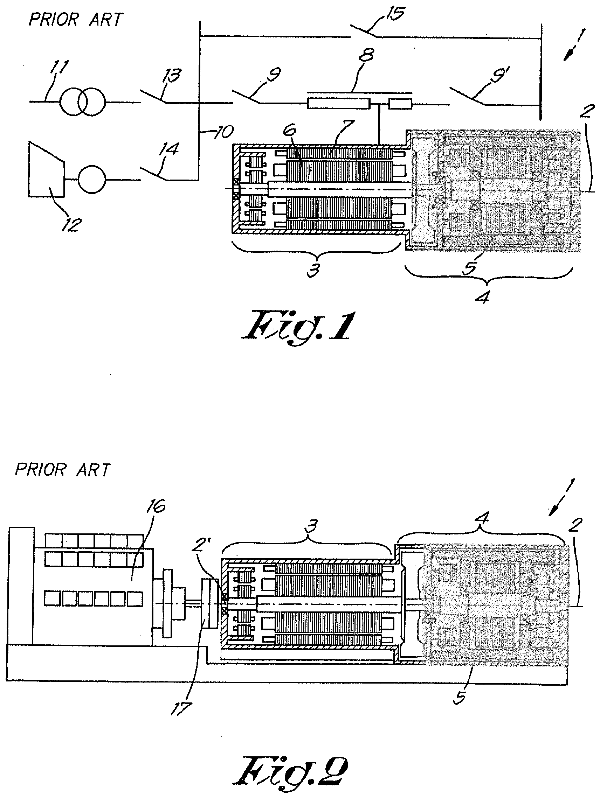

Dans la figure 1 une coupe schématique est représentée selon l'axe longitudinal d'un ADSI 1 selon l'état de l'art décrit dans le brevet EP 1.533.884 qui est incorporé par référence dans cette demande, l'axe longitudinal étant celui de l'arbre commun de rotation 2 qui lie une machine électrique synchrone 3 à un accumulateur d'énergie cinétique 4, muni d'une masse rotative 5.

La masse rotative 5 tourne librement autour de l'arbre 2 et est entrainée à une vitesse de rotation qui est toujours plus élevée que celle de la machine synchrone 3.

La machine synchrone 3 est connectée à une inductance 8 qui est elle-même raccordée à des disjoncteurs 9, 9' qui servent à interrompre ou rétablir la connexion de la machine synchrone 3 à une source électrique ou à la charge critique. Un inverseur de source 10 choisit la source d'électricité parmi le réseau d'électricité 11 et une source alternative 12 comme par exemple un générateur à moteur Diesel à l'aide de deux disjoncteurs 13, 14. Un disjoncteur 15 permet de connecter la source sélectionnée directement à la charge critique en cas d'indisponibilité de l'ADSI

L'ADSI 1 est muni d'un couplage électromagnétique réglable entre la masse tournante 5 et l'arbre 2 de la machine synchrone 3 afin de pouvoir moduler le transfert de l'énergie cinétique de la masse tournante 5 vers la machine synchrone 3 en cas d'une coupure électrique du réseau 11 pour maintenir constante la vitesse de rotation de la machine synchrone 3 qui, dans ce cas, devient alternateur et pour maintenir la fréquence du courant alternatif généré par l'alternateur 3 à la fréquence du réseau 11 coupé.

La figure 2 montre une coupe longitudinale d'un ADSI 1selon l'état de l'art muni d'un moteur Diesel 16 qui lui est associé en prévoyant un second bout d'arbre 2' à la machine synchrone 3 et qui dispose d'un système de couplage temporaire étant en ce cas-ci un embrayage 17.

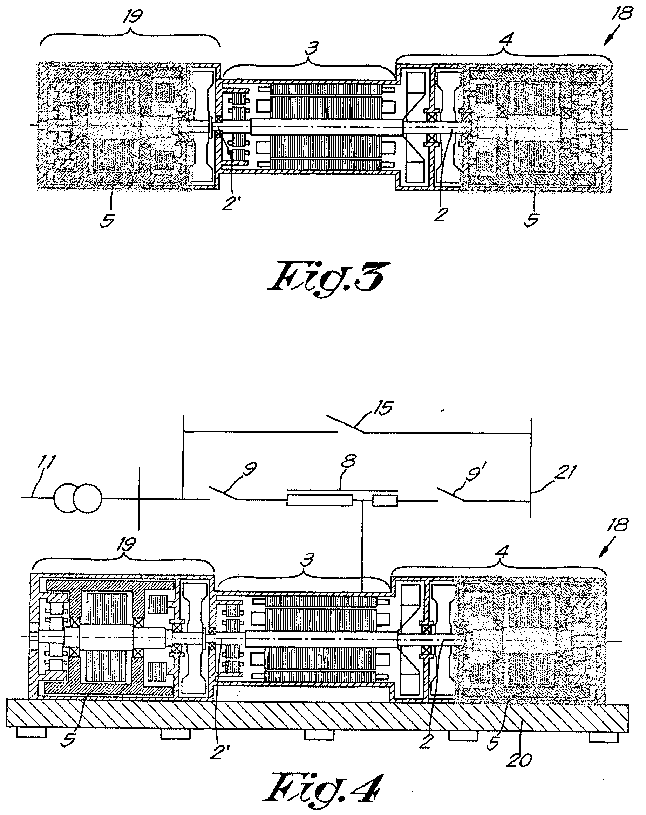

La figure 3 montre une coupe longitudinale schématisée d'un système ADSI 18 selon l'invention, composée d'une machine synchrone 3 dont l'arbre rotatif 2 est lié à un accumulateur d'énergie cinétique 4 selon la description dans le brevet EP 1.533.884 B1 (paragraphes [0019] à [0055]) et les figures qui sont incorporées par référence, et à un deuxième accumulateur d'énergie cinétique 19 du même type et de préférence identique. La machine synchrone 3 ayant une puissance qui est de préférence au moins le double de la puissance unitaire des accumulateurs 4.

Les deux accumulateurs 4 sont munis d'une masse rotative 5.

La figure 4 montre le système de la figure 3 maintenant fixé sur un châssis 20 et connecté via une inductance 8 liée à un disjoncteur 9 qui sert à interrompre la connexion de la machine synchrone 3 à une source électrique 11 et lié à un deuxième disjoncteur 9' qui sert à alimenter la charge critique 21 soit par le réseau 11 ou par la machine synchrone 3 du système d'alimentation 18. L'ensemble est également muni d'un disjoncteur/interrupteur 15 qui permet de poursuivre l'alimentation des charges critiques par le réseau lorsque l'ADSI n'est pas disponible.

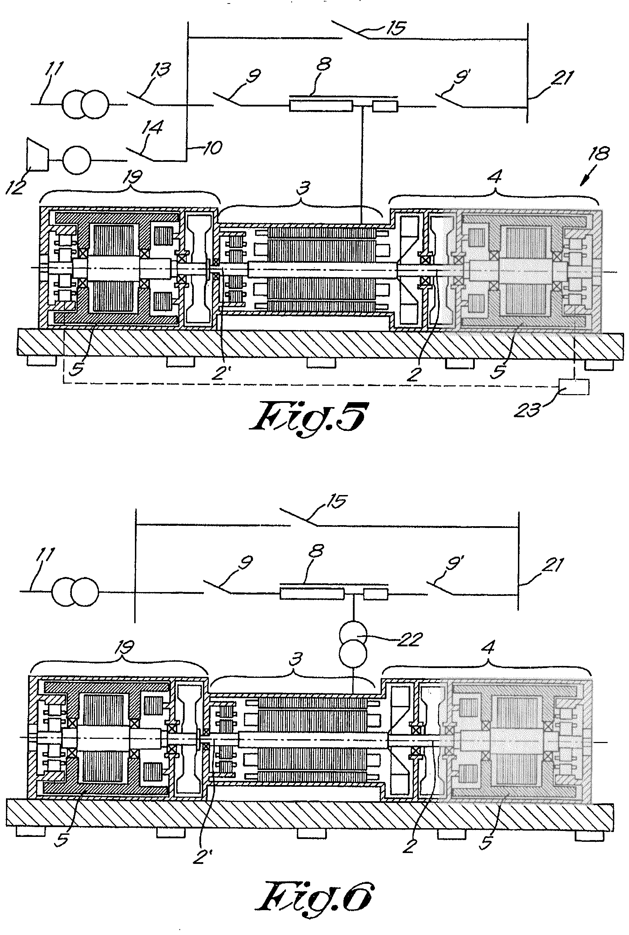

La figure 5 montre le système 18 de la figure 4 maintenant muni d'un inverseur de source 10, qui sélectionne la source d'électricité entre le réseau d'électricité 11 et une source alternative 12 comme par exemple un générateur à moteur Diesel à l'aide de deux disjoncteurs 13, 14.

La figure 6 montre le système de la figure 4, maintenant muni d'un transformateur élévateur de tension 22 inséré entre la machine synchrone 3 et son système de connexion 8, 9 et 9'.

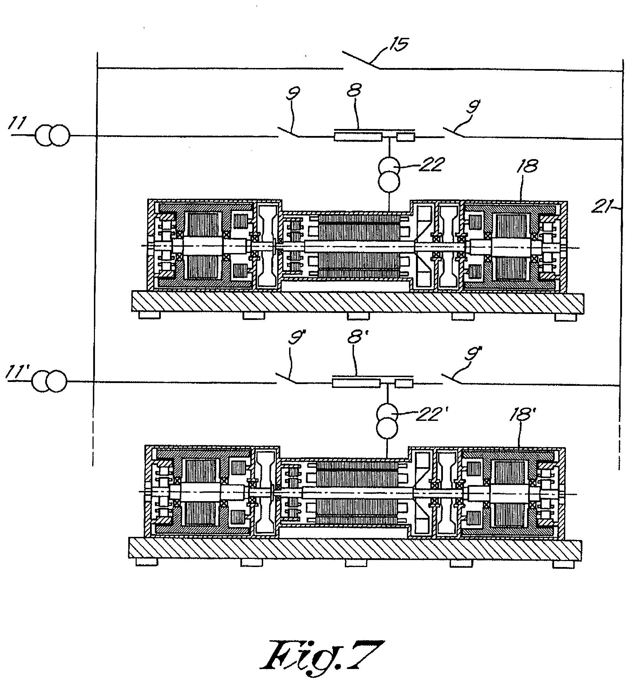

La figure 7 montre plusieurs systèmes 18, 18' de la figure 6, munis de transformateurs 22, 22' maintenant connectés en parallèle pour réaliser des puissances encore plus grandes. Les systèmes 18, 18', ... sont tous liés à la charge critique 21 à alimenter, et sont tous aussi liés à une ou plusieurs sources 11, 11', ... d'électricité.

Le fonctionnement du système d'alimentation électrique sans coupure selon l'invention selon la figure 5 est simple et peut être décrit comme ce qui suit.

Quand le réseau électrique 11 fournit une alimentation d'électricité stable pour une charge critique 21 telle que par exemple un hôpital, un centre informatique, des banques de données critiques, une industrie de haute technologie, le système d'alimentation 18 selon l'invention n'intervient pas mais assure qu'à tout moment les masses rotatives 5 dans les deux accumulateurs d'énergie 4, 19 tournent à une vitesse telle qu'elle permet d'assurer une disponibilité d'énergie suffisante en cas d'urgence.

Lorsque que le réseau électrique 11 est défaillant, la connexion entre le réseau 11 et la charge critique 21 est automatiquement interrompue par l'intervention du système de connexion autonome 8, 9, 9' de la machine synchrone en ouvrant le disjoncteur 9. Le disjoncteur 9' étant fermé, la machine synchrone 3 alimente spontanément la charge critique 21 en puisant son énergie dans les deux masses rotatives 5 et 5' des accumulateurs cinétiques 4, 19 qui à ce moment-là jouent le rôle de moteur pour la machine synchrone 3 qui devient alternateur.

Pendant le temps de coupure du réseau 11, un système de réglage 23 joue le rôle de régulateur de vitesse pour régler la vitesse de rotation des masses rotatives 5 pour que ces vitesses soient égales, de façon à équilibrer la puissance qui est délivrée par chacune des masses rotatives 5 et 5' à l'alternateur 3.

Si la perturbation est trop longue, le système démarre automatiquement le groupe électrogène 12 en mettant en marche par exemple un moteur Diesel qui, une fois en régime, peut se substituer au réseau pour alimenter la charge critique 21. Le système de connexion autonome 8, 9, 9' ferme maintenant le disjoncteur 14 de l'inverseur de source 10, et ferme le disjoncteur 9 de sorte que le groupe électrogène peut maintenant alimenter via le système de connexion autonome la charge critique 21 sans interruption, et ceci jusqu'au retour du réseau 11.

Une fois que le réseau 11 est rétabli, le disjoncteur 13 est automatiquement fermé tandis que le disjoncteur 14 est ouvert pour rétablir l'alimentation de la charge critique 21 par le réseau via le système de connexion autonome ; le groupe électrogène 12 peut être arrêté maintenant.

Le système de connexion autonome de l'ADSI 18 maintient l'alimentation électrique nécessaire à partir du groupe électrogène 12 pour assurer la recharge des accumulateurs d'énergie cinétiques 4, 19, afin d'être disponible lors d'une autre défaillance du réseau public 11.

Selon la figure 7, si un système ADSI 18 à deux accumulateurs d'énergie cinétique 4, 19 a une puissance insuffisante pour protéger la charge critique, il est possible de connecter deux ou plusieurs de ces systèmes (18, 18') à double accumulateurs d'énergie 22, 22',... cinétique en parallèle, de sorte que la puissance délivrée à la charge critique 21 peut s'adapter à la demande.

L'invention n'est pas uniquement applicable à des installations telles que décrites dans les exemples et les figures ci-avant mais également dans toutes les installations de stockage d'énergie, de support et de stabilisation des réseaux, etcetera.

## Revendications

1. Système dynamique d'alimentation électrique (18) sans coupure (ADSI) comportant une machine synchrone (3) à deux bouts d'arbre (2, 2') insérée entre deux accumulateurs d'énergie cinétique (4, 19) dans le but de doubler la puissance unitaire, chacun des deux accumulateurs d'énergie cinétique (4,19) étant muni d'une masse rotative (5) tournant librement autour de l'arbre (2) de la machine synchrone (3), l'ADSI comportant un seul alternateur de puissance double associé aux deux accumulateurs d'énergie cinétique (4,19) en une seule machine et utilisant un réglage (23) qui maintient une vitesse de rotation identique des masses rotatives (5) des deux accumulateurs (3) lors d'un transfert d'énergie cinétique des accumulateurs d'énergie cinétique (4, 19) à la machine synchrone (3) en cas d'une coupure électrique du réseau (11) ou d'une autre source électrique (12) pour alimenter une charge critique (21), le système dynamique d'alimentation électrique (18) comportant en outre un couplage électromagnétique réglable entre chacune des masses tournantes et l'arbre (2) de la machine synchrone (3) afin de pouvoir contrôler le transfert de l'énergie cinétique de chaque masse tournante vers l'alternateur pour maintenir la vitesse de rotation de la machine synchrone (3) constante en cas d'une coupure électrique du réseau (11) ou d'une autre source électrique (12).

2. Système dynamique d'alimentation électrique (18) selon la revendication 1, **caractérisé en ce que** les carcasses de la machine synchrone (3) et des accumulateurs (4, 19) sont boulonnés ensemble pour ne former qu'une seule entité montée sur un châssis commun (20).

3. Système dynamique d'alimentation électrique (18) selon l'une quelconque des revendications précédentes, **caractérisé en ce que** la machine synchrone (3) est équipée d'un système de connexion autonome comportant une inductance (8) et deux disjoncteurs dont le premier (9) sert à interrompre la connexion de la machine synchrone (3) avec le réseau électrique (11) et dont le deuxième (9') sert à maintenir la connexion de la machine synchrone (3) avec la charge critique (21) qui doit être alimentée sans interruption.

4. Système dynamique d'alimentation électrique (18) selon l'une quelconque des revendications précédentes, **caractérisé en ce qu'**il est équipé d'un inverseur de source (10) qui peut alterner entre le réseau d'électricité (11) et un groupe électrogène (12) pour assurer une alimentation dynamique sans coupure de longue durée.

5. Système dynamique d'alimentation électrique (18) selon l'une quelconque des revendications précédentes, **caractérisé en ce qu'**en temps normal sans coupure électrique, les masses tournantes sont entraînées à une vitesse plus élevée que la vitesse de rotation de la machine synchrone.

6. Système dynamique d'alimentation électrique (18) selon l'une quelconque des revendications précédentes, **caractérisé en ce que** les accumulateurs d'énergie cinétique (4,19) sont de la même capacité.

7. Système dynamique d'alimentation électrique (18) selon l'une quelconque des revendications 4 à 7, **caractérisés en ce qu'**il comprend un transformateur (22) inséré entre la machine synchrone (3) et le système de connexion autonome pour transformer l'alimentation électrique en moyenne tension.

8. Ensemble de systèmes dynamiques d'alimentation électrique (18, 18') selon l'une quelconque des revendications précédentes, **caractérisés en ce qu'**ils sont connectés en parallèle pour réaliser des puissances encore plus grandes.

9. Méthode pour alimenter une charge critique en cas de coupure du réseau ou d'une autre source électrique à courant alternatif d'une certaine fréquence alimentant la charge critique en utilisant un système dynamique d'alimentation électrique (18) sans coupure, appelé ADSI, **caractérisée en ce que** l'ADSI comporte en une seule machine une machine synchrone (3) à deux bouts d'arbre (2, 2') insérée entre deux accumulateurs d'énergie cinétique (4, 19), chacun des deux accumulateurs d'énergie cinétique (4,19) étant muni d'une masse rotative (5) pouvant tourner librement autour de l'arbre (2) de la machine synchrone (3) avec un couplage électromagnétique réglable entre chacune des masses tournantes et l'arbre (2) de la machine synchrone (3) afin de pouvoir contrôler le transfert de l'énergie cinétique de chaque masse tournante vers l'alternateur, la méthode comprenant les démarches suivantes :
- en temps normal sans coupure électrique du réseau ou d'une autre source, d'entrainer chacune des masses rotatives (5) à une vitesse plus élevée que la vitesse de rotation de la machine synchrone (3) et,
- en cas d'une coupure électrique du réseau (11) ou d'une autre source électrique (12), de maintenir identique la vitesse de rotation des masses rotatives (5) des deux accumulateurs (4,19) et de maintenir constante la vitesse de rotation de la machine synchrone (3) lors d'un transfert d'énergie cinétique des accumulateurs d'énergie cinétique (4, 19) à la machine synchrone (3) dans son rôle d'alternateur/ afin de maintenir la fréquence du courant alternatif généré par la machine synchrone (3) à la fréquence du réseau (11) ou de l'autre source électrique.

10. Méthode selon la revendication 9, **caractérisée en ce que** les accumulateurs d'énergie cinétique (4,19) sont choisis avec une même capacité.

## Patentansprüche

1. Dynamisches, unterbrechungsfreies Stromversorgungssystem (DUSV) (18), das eine Synchronmaschine (3) mit zwei Achszapfen (2, 2') umfasst, die zwischen zwei kinetische Energiespeicher (4, 19) eingefügt ist, mit dem Zweck die einheitliche Leistung zu verdoppeln, wobei jeder der beiden kinetischen Energiespeicher (4,19) mit einer Drehmasse (5) versehen ist, die frei um die Achse (2) der Synchronmaschine (3) rotiert, das DUSV ist dabei mit einem einzigen Doppelstromgenerator versehen, der in einer einzigen Maschine an die beiden kinetischen Energiespeicher (4, 19) angebunden ist und verwendet dazu eine Einstellung (23), die im Falle einer Unterbrechung des Stromnetzes (11) oder einer anderen Stromquelle (12) während einer kinetischen Energieübertragung der kinetischen Energiespeicher (4, 19) auf die Synchronmaschine (3) eine identische Drehzahl der Drehmassen (5) der beiden Energiespeicher (3) aufrechterhält, um so die Versorgung einer kritischen Last (21) zu gewährleisten, dabei umfasst das dynamische Stromversorgungssystem (18) außerdem eine einstellbare Elektromagnetkupplung zwischen jeder der Drehmassen und der Achse (2) der Synchronmaschine (3), um die kinetische Energieübertragung jeder Drehmasse auf den Generator steuern zu können, um so die Drehzahl der Synchronmaschine (3) im Falle einer Unterbrechung des Stromnetzes (11) oder einer anderen Stromquelle (12) konstant zu halten.

2. Dynamisches Stromversorgungssystem (18) nach Anspruch 1, **dadurch gekennzeichnet, dass** die Gehäuse der Synchronmaschine (3) und der Energiespeicher (4, 19) miteinander verschraubt sind, um eine einzige Einheit zu bilden, die auf einen gemeinsamen Rahmen (20) montiert ist.

3. Dynamisches Stromversorgungssystem (18) nach einem der vorhergehenden Ansprüche, **dadurch gekennzeichnet, dass** die Synchronmaschine (3) mit einem unabhängigen Verbindungssystem ausgestattet ist, das eine Induktivität (8) und zwei Leistungsschalter umfasst, deren erster (9) zur Unterbrechung der Verbindung der Synchronmaschine (3) mit dem Stromnetz (11) und deren zweiter (9') zur Aufrechterhaltung der Verbindung der Synchronmaschine (3) mit der kritischen Last (21), die ohne Unterbrechung mit Strom versorgt werden muss, dient.

4. Dynamisches Stromversorgungssystem (18) nach einem der vorhergehenden Ansprüche, **dadurch gekennzeichnet, dass** es mit einem Netzumschalter (10) ausgestattet ist, der zwischen dem Stromnetz (11) und dem Stromerzeugungsaggregat (12) zur Bereitstellung einer dynamischen Versorgung ohne Unterbrechung von langer Dauer umschalten kann.

5. Dynamisches Stromversorgungssystem (18) nach einem der vorhergehenden Ansprüche, **dadurch gekennzeichnet, dass** unter normalen Umständen ohne Stromausfall die Drehmassen mit einer höheren Drehzahl als die Drehzahl der Synchronmaschine angetrieben werden.

6. Dynamisches Energieversorgungssystem (18) nach einem der vorhergehenden Ansprüche, **dadurch gekennzeichnet, dass** die kinetischen Energiespeicher (4,19) die gleiche Leistung aufweisen.

7. Dynamisches Energieversorgungssystem (18) nach einem der Ansprüche 4 bis 7, **dadurch gekennzeichnet, dass** es einen Transformator (22) umfasst, der zwischen der Synchronmaschine (3) und dem autonomen Verbindungssystem eingefügt ist, um die Stromversorgung in Mittelspannung umzuwandeln.

8. Baugruppe aus dynamischen Energieversorgungssystemen (18, 18') nach einem der vorhergehenden Ansprüche, **dadurch gekennzeichnet, dass** sie zur Erzielung noch größerer Leistungen parallel geschaltet sind.

9. Verfahren zur Versorgung einer kritischen Last im Falle einer Unterbrechung des Stromnetzes oder einer anderen, die kritische Last versorgenden Wechselstromquelle mit einer bestimmten Frequenz, unter Verwendung einer dynamischen, unterbrechungsfreien Stromversorgungsanlage (18), DUSV genannt, **dadurch gekennzeichnet, dass** die DUSV aus einer einzigen Synchronmaschine (3) mit zwei Achszapfen (2, 2'), die zwischen zwei kinetischen Energiespeichern (4, 19) mit je einer Drehmasse (5) eingesetzt sind, welche frei um die Achse (2) der Synchronmaschine (3) drehen kann und mit einer einstellbaren Elektromagnetkupplung zwischen jeder der Drehmassen und der Achse (2) der Synchronmaschine (3) besteht, um die Übertragung der kinetischen Energie jeder Drehmasse auf den Wechselstromgenerator steuern zu können, wobei das Verfahren die folgenden Schritte umfasst:
- unter normalen Umständen ohne Unterbrechung des Stromnetzes oder einer anderen Stromquelle jede der Drehmassen (5) mit einer Geschwindigkeit antreiben, die höher als die Drehzahl der Synchronmaschine (3) ist, und
- im Falle einer Unterbrechung des Stromnetzes (11) oder einer anderen Stromquelle (12), die Drehzahl der Drehmassen (5) der beiden Energiespeicher (4, 19) gleich zu halten und die Drehzahl der Synchronmaschine (3) während einer kinetischen Energieübertragung der kinetischen Energiespeicher (4, 19) auf die Synchronmaschine (3) in ihrer Funktion als Wechselstromgenerator konstant zu halten, um die Frequenz des von der Synchronmaschine (3) erzeugten Wechselstroms auf der Frequenz des Stromnetzes (11) oder der anderen Stromquelle zu halten.

10. Verfahren nach Anspruch 9, **dadurch gekennzeichnet, dass** die kinetischen Energiespeicher (4, 19) mit gleicher Leistung gewählt werden.

## Claims

1. Dynamic power supply system (18) without interruption (ADSI) comprising a synchronous machine (3) with two shaft ends (2, 2') inserted between two kinetic energy accumulators (4, 19) with the aim of doubling the unit power, each of the two kinetic energy accumulators (4,19) being equipped with a rotating mass (5), which freely rotates around the shaft (2) of the synchronous machine (3), the ADSI comprising a single double-power power alternator associated to the two kinetic energy accumulators (4,19) in a single machine and using a setting (23) that maintains a rotation speed identical to the rotation speed of the rotating masses (5) of the two accumulators (3) when kinetic energy is transferred from the kinetic energy accumulators (4, 19) to the synchronous machine (3) to power a critical load (21) in the event of a power failure of the grid (11) or of a different power source (12), the dynamic power supply system (18), moreover, comprising an adjustable electromagnetic coupling between each of the rotating masses and the shaft (2) of the synchronous machine (3), so as to be able to control the transfer of kinetic energy of each rotating mass to the alternator in order to maintain the rotation speed of the synchronous machine (3) constant in the event of a power failure of the grid (11) or of a different power source (12) .

2. Dynamic power supply system (18) according to claim 1, **characterised in that** the frames of the synchronous machine (3) and the accumulators (4, 19) are bolted together in order to form only one single entity mounted on a common base frame (20).

3. Dynamic power supply system (18) according to any one of the preceding claims, **characterised in that** the synchronous machine (3) is equipped with an autonomous connection system comprising an inductance (8) and two circuit breakers, of which the first (9) is used to break the connection between the synchronous machine (3) and the power grid (11) and the second (9') to maintain the connection between the synchronous machine (3) and the critical load (21) which must be supplied uninterruptedly.

4. Dynamic power supply system (18) according to any one of the preceding claims, **characterised in that** it is equipped with a source inverter (10) which is able to alternate between the power grid (11) and an emergency power generator (12) in order to ensure fail-safe dynamic power supply over the long-term.

5. Dynamic power supply system (18) according to any one of the preceding claims, **characterised in that** ordinarily, in the absence of a power failure, the rotating masses rotate at a higher speed than the rotation speed of the synchronous machine.

6. Dynamic power supply system (18) according to any one of the preceding claims, **characterised in that** the kinetic energy accumulators (4,19) have the same capacity.

7. Dynamic power supply system (18) according to any one of the preceding claims 4 to 7, **characterised in that** it comprises a transformer (22) inserted between the synchronous machine (3) and the autonomous connection system in order to transform the power supply into medium voltage.

8. Set of dynamic power supply systems (18, 18') according to any one of the preceding claims, **characterised in that** they are connected in parallel to achieve even greater power.

9. Method to supply a critical load in the event of a power failure of the grid or of a different power source with alternating current at a certain frequency and which feeds the critical load by using a dynamic power supply system (18) without interruption, called ADSI, **characterised in that** the ADSI comprises, in a single machine, a synchronous machine (3) with two shaft ends (2, 2') inserted between two kinetic energy accumulators (4, 19), each of the two kinetic energy accumulators (4,19) being equipped with a rotating mass (5) able to freely rotate around the shaft (2) of the synchronous machine (3), with an adjustable electromagnetic coupling between each of the rotating masses and the shaft (2) of the synchronous machine (3), so as to be able to control the transfer of kinetic energy of each rotating mass to the alternator, the method comprising the following steps:
- ordinarily, in the absence of a power failure of the grid or of a different power source, driving each of the rotating masses (5) at a higher speed than the rotation speed of the synchronous machine (3) and,
- in the event of a power failure of the grid (11) or of a different power source (12), maintaining identical the rotation speed of the rotating masses (5) of the two accumulators (4,19) and maintaining constant the rotation speed of the synchronous machine (3) when kinetic energy is transferred from the kinetic energy accumulators (4, 19) to the synchronous machine (3), in its role as alternator, in order to maintain the frequency of the alternating current generated by the synchronous machine (3) at the frequency of the grid (11) or of the different power source.

10. Method according to the claim 9, **characterised in that** the kinetic energy accumulators (4,19) are chosen such as to have the same capacity.
